# EUROPÄISCHE PATENTSCHRIFT

(11) **EP 2 950 056 B1**
(45) Veröffentlichungstag und Bekanntmachung des Hinweises auf die Patenterteilung: **08.06.2016**
(21) Anmeldenummer: 14169764.9
(22) Anmeldetag: 26.05.2014
(51) Int. Cl.: G01D 5/30, G01D 5/28, G01J 9/00

(54) **Vorrichtung zur Messung eines Drehwinkels und Verfahren zur Bestimmung eines Drehwinkels**
Device for measuring an angle of rotation and method for determining an angle of rotation
Dispositif de mesure d'un angle de rotation et procédé de détermination d'un angle de rotation

(43) Veröffentlichungstag der Anmeldung: 02.12.2015
(73) Patentinhaber: SICK STEGMANN GmbH, 78166 Donaueschingen (DE)
(72) Erfinder: Hopp, Dr. David, 78166 Donaueschingen (DE)
(74) Vertreter: Ludewigt, Christoph

(56) Entgegenhaltungen:
- EP-A2- 2 546 612
- US-A1- 2011 211 190
- US-A1- 2014 043 599

## Beschreibung

Die vorliegende Erfindung betrifft eine Vorrichtung zur Messung eines Drehwinkels zweier relativ zueinander drehender Objekte gemäß dem Oberbegriff des unabhängigen Anspruchs 1 und ein Verfahren zur Bestimmung eines Drehwinkels.

Aus der EP 2 657 652 A1 ist eine Vorrichtung zur Messung des Drehwinkels bekannt.

Die Vorrichtung nutzt das optische Prinzip zur Winkelmessung. Hierbei sendet eine Lichtquelle Lichtstrahlen in Richtung eines mit einer Welle mitdrehenden Polarisators, der die Lichtstrahlen polarisiert und entweder in Richtung eines Empfängers rückreflektiert, wenn der Polarisator lichtreflektierend aufgebaut ist, oder in Richtung des Empfängers durchlässt, wenn der Polarisator lichtdurchlässig aufgebaut ist.

Der Empfänger weist zumindest zwei Empfangselemente auf, vor denen jeweils ein Polarisationsfilter vorgesehen ist, wobei die Polarisationsfilter unterschiedliche Polarisationsrichtung aufweisen.

Solch eine Vorrichtung hat den Nachteil, dass die Qualität der Messung bzw. die Genauigkeit des detektierten Drehwinkels sehr stark von der mechanischen Toleranz der Vorrichtung abhängt, so dass die Herstellung kostspielig ist.

Trotz kostspieliger und genauer Herstellung können im Betrieb der Vorrichtung aufgrund der Betriebsbedingungen hohe mechanische dynamische Toleranzen entstehen, die sich unvermeidbar negativ auf die Genauigkeit der Vorrichtung auswirken.

Aus der EP 2 546 612 A2 ist eine Vorrichtung mit den Merkmalen des Oberbegriffs des unabhängigen Anspruchs 1 bekannt, bei der eine Lichtquelle einen Lichtstrahl aussendet, der an einem rotierenden Element auf eine Blende reflektiert. Durch die Blende wird ein Bild bzw. ein Schatten auf einen Empfänger geworfen, wobei die detektierten Intensitäten des Bildes bzw. des Schatten aufsummiert und mit Referenzdaten verglichen werden. Hieraus wird ein Abweichungsfehler für den Messwert der Drehposition des rotierenden Elements ausgerechnet und in die Berechnung des Messwertes der Drehposition mitberücksichtigt.

Es ist daher eine Aufgabe der vorliegenden Erfindung, eine Vorrichtung zur Messung eines Drehwinkels der eingangs genannten Art zur Verfügung zu stellen, die eine Verbesserung der Genauigkeit einer Messung des Drehwinkelsignals gewährleistet.

Die Aufgabe wird erfindungsgemäß durch eine Vorrichtung zur Messung eines Drehwinkels zweier relativ zueinander drehender Objekte gelöst, mit zumindest einer Lichtquelle zum Aussenden von Licht, mit zumindest einem zu der Lichtquelle relativ drehenden Modulator, wobei der zumindest eine Modulator das ausgesendete Licht mit zumindest einem Winkelversatz in Abhängigkeit des Drehwinkels moduliert, mit zumindest einem Empfänger, und mit einer Auswerteeinheit, wobei die zumindest eine Lichtquelle das Licht als Wellenfront aussendet, wobei der zumindest eine Modulator die ausgesendete Wellenfront mit zumindest einem Winkelversatz in Abhängigkeit des Drehwinkels moduliert, der zumindest eine Empfänger zum Empfangen der modulierten Wellenfront vorgesehen ist, wobei der Empfänger ein erstes Array, das die modulierte Wellenfront beeinflussende erste Elemente umfasst, wobei das erste Array Linsen oder Mikrolinsen als die ersten Elemente aufweist, und ein zweites Array, das photoempfindliche Empfangselemente, die als Photodioden, vorzugsweise Quadrantendioden, ausgebildet sind, umfasst, aufweist, die Auswerteeinheit Signale des zweiten Arrays des Empfängers auswertet, wobei die Signale projizierte Punkte der empfangenen modulierten Wellenfront auf dem zweiten Array repräsentieren, und aus einer durch den zumindest einen Winkelversatz der modulierten Wellenfront resultierenden Änderung der Signale den Drehwinkel ermittelt, und der Empfänger als ein Wellenfrontsensor ausgebildet ist, wobei die Auswerteeinheit eine Bewegung der projizierten Punkte der empfangenen modulierten Wellenfront auf dem zweiten Array ermittelt und die Punktbewegung durch Differenzbildung der detektierten Intensitäten der empfangenen modulierten Wellenfront bestimmt, und wobei die Auswerteeinheit eine Punktbewegung in unterschiedliche laterale Richtungen bestimmt, so dass die Auswerteeinheit pro Richtung eine Differenzbildung durchführt.

Hierbei wird erfindungsgemäß unter Array eine flächige Anordnung der Elemente verstanden.

Durch den Aufbau des Empfängers als Wellenfrontsensor ergibt sich der Vorteil, dass eine Form der Wellenfront und somit einhergehend auch eine Lichtrichtung bzw. ein Einfallswinkel der modulierten Wellenfront bestimmt werden können, woraus wiederum zusätzliche Parameter der Vorrichtung bestimmbar sind.

Gemäß einem weiteren bevorzugten Ausführungsbeispiel ist der Modulator an einer Stirnfläche einer Welle befestigt, wobei der Modulator in einem vorgegebenen definierten Kippwinkel zu der Stirnfläche der Welle gekippt ist und der Kippwinkel die ausgesendete Wellenfront entsprechend moduliert.

Vorteilhafterweise sind die ersten Elemente des ersten Arrays am Rande des zweiten Arrays angeordnet, so dass der gesamte Randbereich des Arrays von Empfangselementen durch die ersten Elemente abgedeckt ist, oder die in Gruppen angeordneten ersten Elemente des ersten Arrays derart angeordnet sind, dass Eckbereiche des zweiten Arrays oder ein Bereich der Mitte des zweiten Arrays durch die Gruppen von ersten Elemente abgedeckt sind.

Gemäß einem weiteren bevorzugten Ausführungsbeispiel weist das zweite Array mindestens genauso viele, vorzugsweise zweimal oder viermal so viele, Empfangselemente auf, wie das erste Array an ersten Elementen hat. Hierbei ergibt sich der Vorteil, dass eine räumliche Verteilung der einzelnen Abbildungen der modulierten Wellenfront bestimmbar ist.

Gemäß einem weiteren bevorzugten Ausführungsbeispiel sind jeweils vier Empfangselemente, vorzugsweise ein Vielfaches von in Gruppen angeordneten Empfangselementen, einem ersten Element zugeordnet.

Gemäß einem weiteren bevorzugten Ausführungsbeispiel projizieren die ersten Elemente die modulierte Wellenfront als Punkte auf die Empfangselemente, wobei die projizierten Punkte mit der Drehung des Modulators auf den Empfangselementen bewegbar sind. Hierbei können die projizierten Punkte als Lichtpunkte oder Schattenpunkte ausgebildet sein.

Gemäß einem weiteren bevorzugten Ausführungsbeispiel ist der Modulator derart spiegelnd oder transparent ausgebildet, dass die ausgesendete Wellenfront mit dem Winkelversatz moduliert reflektierbar oder transmittierbar ist.

Ferner ist es eine Aufgabe der Erfindung ein Verfahren zur Messung eines Drehwinkels zweier relativ zueinander drehender Objekte derart zu verbessern, dass eine höhere Genauigkeit der Messung gewährleistet ist.

Die Aufgabe wird erfindungsgemäß gelöst durch ein Verfahren, mit den Schritten Aussenden von Licht als Wellenfront mittels einer Lichtquelle; Modulieren der ausgesendeten Wellenfront mittels eines Modulators, wobei der Modulator zumindest einen Kippwinkel aufweist, so dass eine modulierte Wellenfront mit zumindest einem Winkelversatz zu der ausgesendeten Wellenfront auf einem ersten Array eines Empfängers rückreflektiert oder transmittiert wird; Projizieren der modulierten Wellenfront mittels des ersten Arrays auf einem zweiten Array, so dass eine Mehrzahl von projizierten Punkte auf dem zweiten Array abgebildet werden; Ermitteln einer Bewegung der projizierten Punkte der empfangenen modulierten Wellenfront auf dem zweiten Array, wobei die Punktbewegung durch Differenzbildung der detektierten Intensitäten der empfangenen modulierten Wellenfront bestimmt wird; und wobei die Punktbewegung in unterschiedliche laterale Richtungen bestimmt wird, so dass pro Richtung eine Differenzbildung durchgeführt wird; und Ermitteln zumindest eines Drehwinkelsignals aus der kontinuierlichen Veränderung der modulierten Wellenfront und der Punktbewegung der projizierten Punkte.

Gemäß einem bevorzugten Ausführungsbeispiel wird eine Auswertung der projizierten Punkte für jedes die modulierte Wellenfront beeinflussende erste Element des ersten Arrays durchgeführt und es werden mehrere Drehwinkelsignale entsprechend der Anzahl der ersten Elemente ermittelt.

Gemäß einem weiteren bevorzugten Ausführungsbeispiel wird zumindest ein Intensitätsschwerpunkt für mehrere Empfangselemente ausgewertet, so dass der projizierte Punkt des der Empfangselemente zugeordneten ersten Elements bestimmt wird.

Gemäß einem weiteren bevorzugten Ausführungsbeispiel werden die ermittelten projizierten Punkte den jeweiligen Positionen der ersten Elemente zugeordnet, so dass zusätzliche Systemgrößen, vorzugsweise Amplitude oder Phasenlage des Drehwinkelsignals bestimmt werden.

Bevorzugte Ausgestaltungen und Weiterbildungen sowie weitere Vorteile der Erfindung sind den abhängigen Ansprüchen der nachfolgenden Beschreibung und den Zeichnungen zu entnehmen.

Im Folgenden wird die Erfindung anhand von Ausführungsbeispielen unter Bezugnahme auf die Zeichnungen im Einzelnen erläutert. Hierbei sind gleiche Teile in den Zeichnungen mit den gleichen Bezugszeichen gekennzeichnet. In den Zeichnungen zeigen:
- Fig. 1: eine schematische Darstellung einer erfindungsgemäßen Vorrichtung;
- Fig. 2A-B: eine schematische Darstellung von zwei Ausführungsbeispielen der erfindungsgemäßen Vorrichtung;
- Fig. 3: eine schematische Darstellung eines weiteren Ausführungsbeispiels der erfindungsgemäßen Vorrichtung;
- Fig. 4: eine schematische Darstellung eines weiteren Ausführungsbeispiels einer erfindungsgemäßen Vorrichtung;
- Fig. 5A-E: eine schematische Darstellung von Ausführungsbeispielen von Anordnungen der Array der erfindungsgemäßen Vorrichtung.

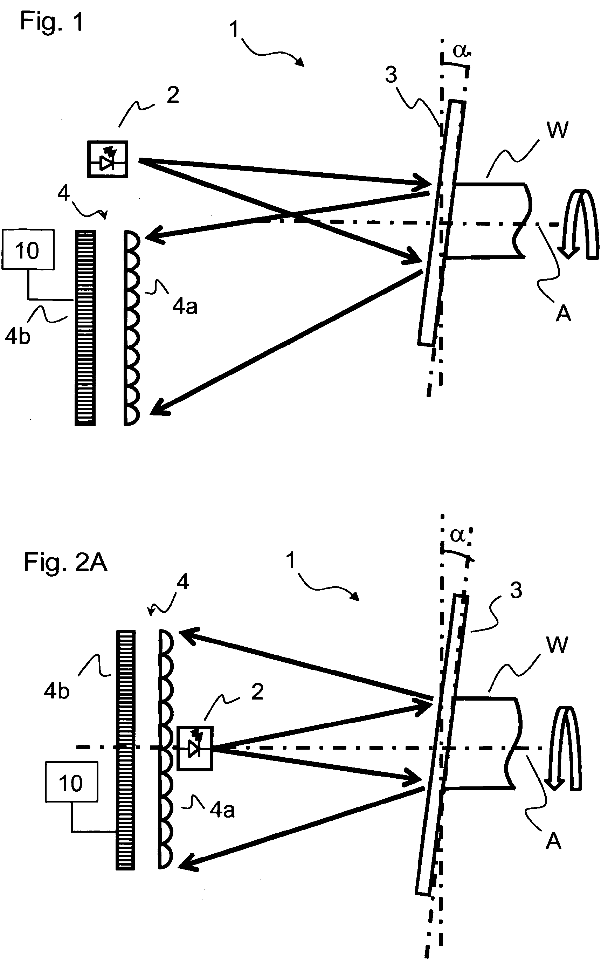

In Figur 1 ist ein Ausführungsbeispiel einer erfindungsgemäßen Vorrichtung 1 zur Messung eines Drehwinkels zweier relativ zueinander drehender Objekte gezeigt, wobei in dieser Ausführungsform die Vorrichtung auf dem Prinzip der Reflexion funktioniert.

Die Vorrichtung 1 ist mit zumindest einer Lichtquelle 2 zum Aussenden von Licht mit einer Wellenfront vorgesehen. Hierbei ist die Wellenfront als eine virtuelle Fläche definiert, welche sich orthogonal zu den ausgesendeten Lichtstrahlen der Lichtquelle 2 befindet.

Ferner weist die Vorrichtung 1 zumindest einen Modulator 3 auf, der zu der Lichtquelle relativ drehbar ist und die ausgesendete Wellenfront der Lichtquelle 2 mit zumindest einem Winkelversatz in Abhängigkeit des Drehwinkels moduliert. Weiterhin ist zumindest ein Empfänger 4 zum Empfangen der modulierten Wellenfront vorgesehen.

Gemäß dem Ausführungsbeispiel ist der Modulator 3 an einer Stirnfläche einer Welle W vorgesehen, wobei der Modulator 3 um einen Winkel α, im Folgenden auch als Kippwinkel bezeichnet, zu der Stirnfläche der Welle W gekippt montiert ist. Der Modulator 3 ist lichtreflektierend, so dass der Modulator 3 gegenüberliegend zu der Lichtquelle 2 und dem Empfänger 4 angeordnet ist. Hierbei sind die Lichtquelle 2 und der Empfänger 4 jeweils beabstandet zu einer Drehachse A der Welle W und ebenfalls gegenüberliegend angeordnet.

Die Welle W mit dem Modulator 3 dreht sich relativ zu der Lichtquelle 2 und dem Empfänger 4.

Zur Messung eines Drehwinkels sendet die Lichtquelle 2 Licht mit einer Wellenfront in Richtung des Modulators 3, der die ausgesendete Wellenfront moduliert und die modulierte Wellenfront zurück an dem Empfänger 4 reflektiert. Die modulierte und rückreflektierte Wellenfront trifft mit dem bestimmten Winkel auf den Empfänger 4.

Erfindungsgemäß besteht der Empfänger 4 aus einem ersten Array 4a und einem zweiten Array 4b, wobei das erste Array 4a die Wellenfront beeinflussende erste Elemente 5a aufweist und das zweite Array 4b photo-empfindliche Empfangselemente 5b umfasst. Hierbei ist das zweite Array 4b vollständig oder in definierten Teilbereichen durch das erste Array 4a bedeckt und das erste Array 4a zwischen dem zweiten Array 4b und dem Modulator 3 angeordnet.

Vorteilhafterweise umfasst das erste Array 4a Linsen oder Mikrolinsen als die ersten Elemente 5a. Das zweite Array 4b umfasst Photodioden, vorzugsweise Quadrantendioden, als Empfangselemente 5b.

Die modulierte Wellenfront der Lichtquelle 2 trifft mit unterschiedlichen Einfallswinkeln auf das erste Array 4a bzw. Array von Linsen bzw. Mikrolinsen und wird durch jedes erste Element 5a bzw. jede Linse bzw. Mikrolinse unterschiedlich in Richtung des zweiten Arrays 4b gelenkt. D. h. die ersten Elemente 5a projizieren die modulierte Wellenfront auf die Empfangselemente 5b.

Von jedem ersten Element 5a bzw. jeder Linse bzw. Mikrolinse entsteht auf dem zweiten Array 4b jeweils ein projizierter Punkt aus der Wellenfront, so dass eine Vielzahl an projizierten Punkten in Abhängigkeit der Anzahl der ersten Elemente 5a aus der Wellenfront auf den Empfangselementen 5b des zweiten Arrays 4b abgebildet sind.

Hierbei ist es vorteilhaft, dass das zweite Array 4b mindestens genauso viele, vorzugsweise zweimal oder viermal so viele, Empfangselemente 5b aufweist, wie das erste Array 4a an ersten Elementen 5a hat. D. h. insbesondere je mehr Empfangselemente 5b einem ersten Element 5a zugeordnet sind, desto genauer kann eine Auswertung durchgeführt werden, da sich ein größerer Arbeitsbereich für die Auswertung ergibt, wenn eine Schwerpunktbestimmung bei der Auswertung durchgeführt wird. Hierdurch ist eine größere mechanische Toleranz für die Vorrichtung 1 erzielbar.

Erfindungsgemäß führt bei einer Drehung der Welle W mit dem Modulator 3 um die Drehachse A der Kippwinkel α zwischen dem Modulator 3 und der Stirnfläche der Welle W zu einem Taumeln des Modulators 3 bezüglich der auf ihn gesendeten Wellenfront und damit zu dem Winkelversatz zwischen der ausgesendeten Wellenfront und der rückreflektierten Wellenfront. D.h. die ausgesendete Wellenfront ist mit dem Winkelversatz moduliert. Ferner führt der Winkelversatz zu einem Taumeln der Einfallswinkel der modulierten rückreflektierten Wellenfront auf die ersten Elemente 5a, vorzugsweise Linsen bzw. Mikrolinsen, des Empfängers 4.

Falls der Modulator 3 keine Planfläche mit nur einem Kippwinkel α, sondern eine Freiformfläche mit unterschiedlichen Kippwinkeln α aufweist, dann wird erfindungsgemäß die ausgesendete Wellenfront mit unterschiedlichen Winkelversätzen moduliert, so dass die modulierte Wellenfront in Abhängigkeit vom Drehwinkel des Modulators 3 unterschiedliche Winkelversätze aufweist.

Anhand der kontinuierlichen lateralen Änderung der projizierten Punkte auf dem zweiten Array 4b bestimmt eine Auswerteeinheit 10 eine kontinuierliche Veränderung der Einfallswinkel, auch als Taumelwinkel bezeichnet, der modulierten rückreflektierten Wellenfront, woraus die Auswerteeinheit 10 wiederum eine Vielzahl von absoluten Winkelsignalen bzw. Drehwinkelsignalen ermittelt. Aus der Vielzahl der absoluten Winkelsignalen bzw. Drehwinkelsignalen lässt sich ein hochgenaues resultierendes Winkelsignal bzw. Drehwinkelsignal ermitteln.

Durch eine bevorzugte Ausführung des Empfängers 4 als Wellenfrontsensor bzw. als flächiges erstes Array 4a mit Linsen bzw. Mikrolinsen und flächiges zweites Array 4b mit Photodioden und der damit einhergehenden räumlichen Verteilung der einzelnen projizierten Punkte können zusätzlich zum Drehwinkel weitere Parameter der Vorrichtung 1 detektiert werden.

Bei bekannter Abstrahlcharakteristik der Lichtquelle 2 sowie bekannter Geometrie des Modulators 3 kann z. B. auf den Kippwinkel α bzw. den Taumelwinkel des Modulators 3 geschlossen werden. Dieser hat u. a. Auswirkungen auf eine Signalamplitude.

Da die Ermittlung der Signale durch die Auswerteeinheit 10 im Wesentlichen von dem Winkelversatz zwischen der ausgesendeten Wellenfront und der modulierten Wellenfront resultiert, ist die Form des Modulators 3 frei wählbar, so dass grundsätzlich alle geometrischen Formen bis hin zu Freiformflächen des Modulators 3 möglich sind. D. h. anstatt aus einer Planfläche mit Kippwinkel α, wie in der Figur 1 gezeigt, kann der Modulator 3 auch aus einer polierten, schrägen Stirnfläche der Welle W bestehen. Hierbei kann der Modulator 3 refraktive oder diffraktive Strukturen aufweisen.

Weiterhin ist es möglich, den Abstand zwischen Modulator 3 und Empfänger 4 zu bestimmen. Hierfür wird die räumliche Verteilung des als Wellenfrontsensor ausgebildeten Empfängers 4 genutzt. Dies kann ähnlich wie bei bekannten Triangulationsverfahren geschehen.

Die lokale Positionsänderung der projizierten Punkte auf dem zweiten Array 4b unterscheidet sich je nach räumlicher Lage der jeweiligen ersten Elementen 5a (Linse) und Empfangselementen 5b (Photodiode) bezüglich der Positionen von Lichtquelle 2 und Modulator 3. Aufgrund einer Auswertung mehrerer räumlich verteilter Informationen kann zwischen Taumelwinkel und Abstand des Modulators 3 unterschieden werden.

Bei einem planen und taumelnden Modulator 3 entspricht eine Abstandsänderung geometrisch einem lateralen Versatz. Daher kann prinzipiell auch dieser detektiert werden. Die Separation zwischen den beiden lateralen Raumrichtungen erfolgt durch die Auswertung der Abstandsvariation in diesen beiden Richtungen bei Drehung des Modulators 3.

Auch eine relative Kippung der Drehachse A zum Empfänger 4 kann ermittelt werden, indem eine Modulation der Amplituden der Einzelsignale über eine Umdrehung erfasst wird. Prinzipiell lassen sich so auch die relative Position der Lichtquelle 2 oder die relative Kippung der Lichtquelle 2 ermitteln.

Für diese Parameter sowie auch für weitere Auswertungen relativer Positionen der Vorrichtungskomponenten im Raum kann sowohl die Beleuchtungscharakteristik als auch die Geometrie des Modulators 3 beliebig angepasst und optimiert werden.

Dies kann im Falle der Beleuchtungscharakteristik z. B. mit Hilfe strahlformender optischer Komponenten und im Falle einer Modulatorgeometrie z. B. durch gezielte Formung der reflektierenden Fläche des Modulators 3 geschehen.

Die zusätzlich ermittelbaren Messparameter sind prinzipiell abhängig von A-Priori-Wissen z. B. um die Geometrie des Modulators 3 oder die Abstrahlcharakteristik der Lichtquelle 2.

Je nach Vorwissen und Aufbau der Vorrichtung 1 können so gezielt ausgesuchte Parameter detektiert werden. Dies ist insbesondere dann interessant, wenn die eigentlichen Winkelsignale durch mechanische Toleranzen beeinträchtigt werden.

Der dadurch entstandene Messfehler kann vorteilhafterweise mit Hilfe der gewonnenen Zusatzinformationen korrigiert werden.

So ist z. B. eine Korrektur der Amplitude bzw. eine Anpassung der Dynamik bezüglich der Beleuchtungsintensitat bei einer Abstandsänderung des Modulators 3 möglich. Eine Korrektur z. B. der Phasenlage der Winkelsignale, welche durch die Verkippung der Drehachse A bezüglich Lichtquelle 2 bzw. Empfänger 4 zustande kommt, kann korrigiert werden.

Ebenso korrigiert werden kann z. B. die Phasenlage der Signale durch eine fehlerhafte Position oder Kippung der Lichtquelle 2 bezüglich des Empfängers 4.

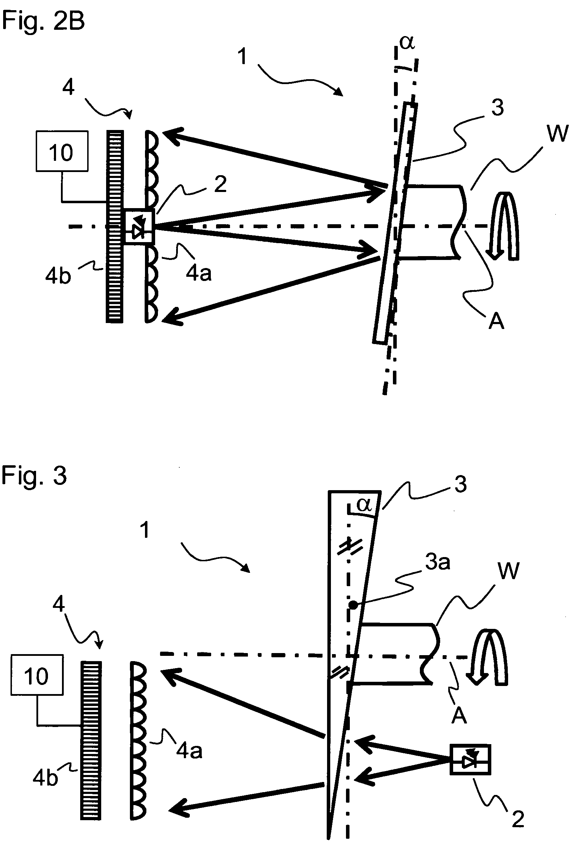

In den Figuren 2A und 2B sind zwei alternative Ausführungsbeispiele der erfindungsgemäßen Vorrichtung 1 gezeigt.

Bei den beiden Ausführungsbeispielen der Figuren 2A und 2B sind die Teile der Vorrichtung 1 koaxial zu der Drehachse A der Welle W angeordnet. D. h. sowohl die Lichtquelle 2, der Modulator 3, das erste Array 4a und das zweite Array 4b sind auf der Drehachse A der Welle W und für sich symmetrisch zu der Drehachse A angeordnet.

Der Unterschied zwischen dem Ausführungsbeispiel in der Figur 2A zu dem Ausführungsbeispiel in der Figur 2B besteht darin, dass die Lichtquelle 2 bei dem Ausführungsbeispiel in der Figur 2A vor dem Empfänger 4 und bei dem Ausführungsbeispiel in der Figur 2B in dem Empfänger 4, insbesondere mittig in dem ersten Array 4a angeordnet ist.

Durch die koaxiale Anordnung der Teile ergibt sich eine zu der Drehachse A symmetrische modulierte Wellenfront von rückreflektiertem Licht, die auf das erste Array 4a trifft, wobei der Kippwinkel α zweifachen Einfluss auf den Einfallswinkel der modulierten Wellenfront hat.

Bei der Positionierung der Lichtquelle 2 mittig in dem ersten Array 4a, gemäß der Figur 2B, weist die Vorrichtung 1 eine verbesserte Kompaktheit auf. Ferner ergibt sich eine zusätzliche Symmetrie der Vorrichtung 1, so dass es vorteilhaft für die Auswertung sämtlicher Signale ist.

Die Vorrichtung 1 lässt sich auch, wie in der Figur 3 gezeigt, anstatt auf dem Prinzip der Reflexion des ausgesendeten Lichts auch auf dem Prinzip der Transmission des ausgesendeten Lichts aufbauen.

Hierbei besteht der Modulator 3 aus einem transparenten bzw. lichtdurchlässigen Keil 3a, der zur Umgebung eine unterschiedliche Brechzahl aufweist. Der Keil 3a ist an der Stirnfläche der Welle W derart vorgesehen, dass an einer Seite des Keils 3a sich ein Kippwinkel α zwischen einer Fläche des Keils 3a und einer Symmetrieachse, die senkrecht zu der Drehachse A der Welle W ist, ergibt. Hierbei kann der Keil 3a bzw. der transparente Modulator 3 ebenfalls eine beliebige Form bzw. Dicke aufweisen.

Die Lichtquelle 2 ist auf einer Seite und der Empfänger 4 auf der anderen Seite des Keils 3a angeordnet, so dass die von der Lichtquelle 2 ausgesendete Wellenfront durch den Keil 3a moduliert hindurchgeht und als modulierte Wellenfront auf das erste Array 4a des Empfängers 4 auftrifft.

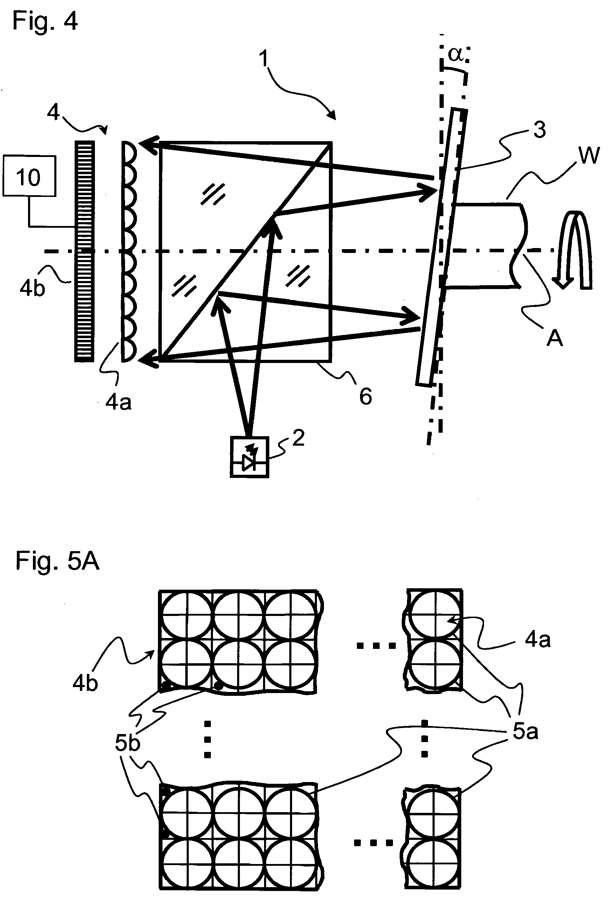

Figur 4 zeigt ein weiteres bevorzugtes Ausführungsbeispiel der erfindungsgemäßen Vorrichtung 1, bei der das Prinzip der Reflexion angewendet ist.

Hierbei ist, im Gegensatz zu den bisherigen Ausführungsbeispielen, ein Strahlteiler 6 vorgesehen, der zwischen dem Modulator 3 und dem Empfänger 4 angeordnet ist. Der Strahlteiler 6 ist derart ausgebildet, dass die Lichtquelle 2 zwar ebenfalls mittig zwischen dem Modulator 3 und dem Empfänger 4, jedoch seitlich von beidem angeordnet ist.

Bei dieser Anordnung sendet die Lichtquelle 2 von einer Seite der Vorrichtung 1 Licht mit einer Wellenfront in Richtung des Strahlteilers 6, der das ausgesendete Licht in Richtung des Modulators 3 umlenkt. Der Modulator 3 moduliert die ausgesendete Wellenfront und reflektiert die modulierte Wellenfront zurück in Richtung des Strahlteilers 6.

Die rückreflektierte, modulierte Wellenfront wird vom Strahlteiler 6 in Richtung des Empfängers 4 durchgelassen, so dass es als modulierte Wellenfront auf das erste Array 4a trifft. Die ersten Elemente 5a bzw. Linsen projizieren die modulierte Wellenfront als eine Vielzahl von projizierten Punkten auf ihre jeweilige zugeordnete Empfangselemente 5b.

Hierdurch ergibt sich ebenfalls eine zusätzliche Symmetrie der Vorrichtung 1, die entsprechend vorteilhaft für die Signalauswertung ist.

Generell für alle Ausführungsbeispiele der erfindungsgemäßen Vorrichtung 1 wird die Bewegung der projizierten Punkte der empfangenen, modulierten Wellenfront auf dem zweiten Array 4b ermittelt, wobei die Punktbewegung durch Differenzbildung oder Schwerpunktbestimmung der detektierten Intensitäten der empfangenen, modulierten Wellenfront bestimmt wird.

Hieraus kann zumindest ein absolutes Drehwinkelsignal aus der kontinuierlichen Veränderung des Einfallswinkels der empfangenen, modulierten Wellenfront und der Punktbewegung der projizierten Punkte bestimmt werden.

Dies bedeutet vorzugsweise, dass eine Auswertung der projizierten Punkte für jedes erste Element 5a bzw. jede Linse des ersten Arrays 4a durchgeführt wird und mehrere Drehwinkelsignale entsprechend der Anzahl der ersten Elemente 5a bzw. der Linsen ermittelt werden.

D. h. insbesondere für jedes erste Element 5a bzw. jede Linse geschieht die Auswertung zunächst separat, idealerweise in beide lateralen Richtungen der Änderung der projizierten Punkte, so dass schließlich entsprechend der Anzahl der ersten Elemente 5a bzw. Linsen mehrere Signale vorhanden sind, welche der räumlichen Position der ersten Elemente 5a bzw. Linsen zugeordnet werden können.

Aus diesen Informationen lassen sich nun alle oben erwähnten Parameter berechnen. Aufgrund der Vielzahl der vorliegenden Signale eines ersten Arrays 4a bzw. eines ersten Arrays von Linsen/Mikrolinsen kann das resultierende bzw. das ausgegebene Drehwinkelsignal nun mit wesentlich größerer Genauigkeit generiert werden.

Hierfür trägt zunächst die Mögtichkeit der Redundanz bei, d. h. alle Drehwinkelsignale werden z. B. im Sinne einer Mittelung miteinander verrechnet. Dabei können weitere Algorithmen, z. B. im Sinne einer Gewichtung der Einzelsignale oder z. B. einer virtuellen Verschaltung zu Summen- oder Differenzsignalen, Verwendung finden.

Überdies ist auch eine selektive Auswertung der Signale der einzelnen ersten Array 4a bzw. Array von Linsen unter Kenntnis von zusätzlichen Messparametern möglich. Hierdurch kann zur Robustheit der Vorrichtung 1 z. B. gegenüber Verschmutzung beigetragen werden.

Weiterhin kann eine Plausibilitätsprüfung der einzelnen Signale stattfinden, so dass z. B. geprüft wird, ob überhaupt eine Auswertung eines einzelnen ersten Arrays 4a möglich ist. Falls die Prüfung negativ ausfällt, kann dieses Signal oder auch ein oder mehrere ausgewählte weitere Signale ignoriert oder gesondert behandelt werden. Dies macht die Vorrichtung 1 ebenfalls robust gegenüber z. B. Verschmutzung oder ungewollter Abschattung.

Die beschriebene Auswertungsverbesserung resultiert im Wesentlichen aus der flächigen und variablen Anordnung der ersten Array 4a und zweiten Array 4b zueinander.

Anstatt einer Verwendung des ersten Arrays 4a mit Linsen bzw. Mikrolinsen kann auch bei einem nicht gezeigten Ausführungsbeispiel das erste Array 4a mit Löchern bzw. Blenden vorgesehen sein, so dass die rückreflektierte modulierte Wellenfront als Schattenpunkte auf dem zweiten Array 4b projiziert wird.

Im Gegensatz zu den gezeigten Ausführungsbeispielen ist die Intensität der projizierten Schattenpunkte wesentlich geringer als die Intensität der projizierten (Licht)-Punkte der modulierten Wellenfront, so dass eine größere photoempfindliche Fläche als zweites Array 4b benötigt wird, um eine ähnliche genaue Auswertung zu erzielen.

Die vorteilhafte Anordnung der gezeigten Ausführungsbeispiele ist in den Figuren 5A bis 5E schematisch dargestellt.

Eine vollständige Abdeckung des zweiten Arrays 4b durch das erste Array 4a ist in der Figur 5A dargestellt. Die ersten Elemente 5a sind als Linsen ausgebildet, wobei die Linsen refraktiv oder diffraktiv ausgeführt sein können.

Hierbei sind pro Linse 5a vier Empfangselemente 5b aus photoempfindlichen Flächen, insbesondere Quadrantendioden, zugeordnet. Hierdurch muss der jeweilige projizierte Punkt bzw. Lichtpunkt in Lichtrichtung nicht zwingend genau auf die photoempfindliche Fläche fallen, so dass die Vorrichtung 1 gegenüber Unschärfe robust ist.

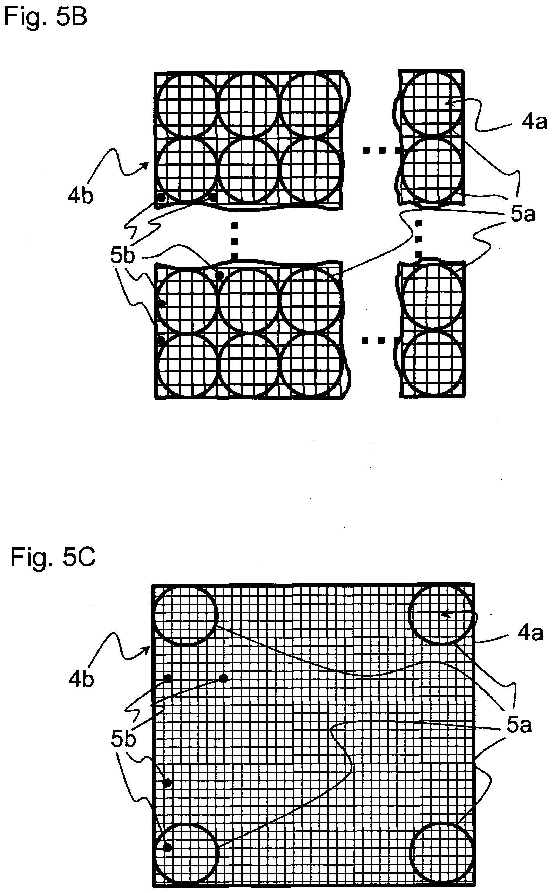

Um eine höhere Auslösung bzw. eine größere laterale Bewegung der projizierten Punkte zu erzielen, ist eine Zuordnung von mehr Empfangselementen 5b pro erstes Element 5a bzw. Linse vorteilhaft. Beispielhaft ist in Figur 5B die Zuordnung von 5x5 Empfangselementen 5b pro erstes Element 5a bzw. Linse gezeigt.

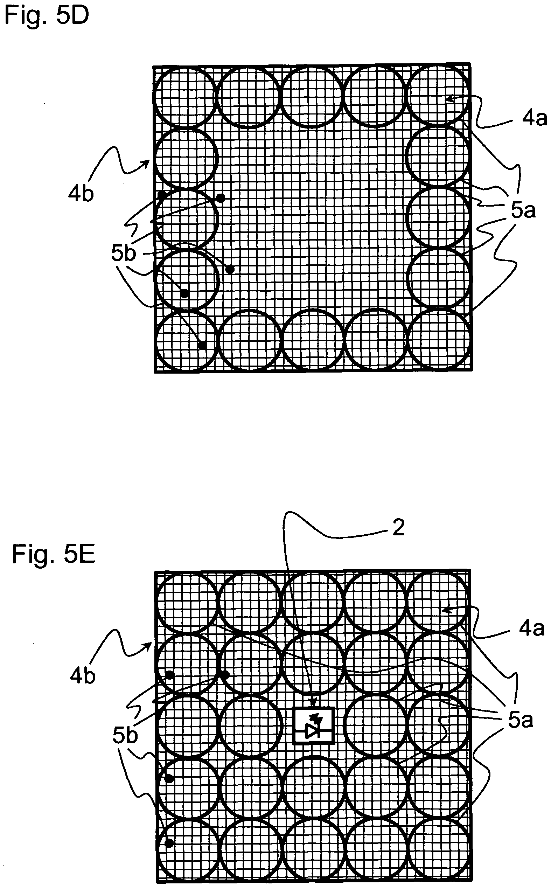

Im Gegensatz zu der vollständigen Abdeckung des zweiten Arrays 4b durch das erste Array 4a, zeigen die Figuren 5C und 5D bevorzugte Ausführungsbeispiele, bei denen eine Teilabdeckung des zweiten Arrays 4b durch lokale Anordnung des ersten Arrays 4a vorgesehen ist.

In Figur 5C sind lediglich die vier Eckbereiche des zweiten Arrays 4b durch das erste Array 4a mit vier lokalen ersten Elementen 5a bzw. Linsen abgedeckt. In dem Ausführungsbeispiel gemäß Figur 5D sind alle vier Randbereiche des zweiten Arrays 4b durch erste Elemente 5a bzw. Linsen abgedeckt.

Figur 5E zeigt eine Draufsicht auf die Anordnung der Lichtquelle 2, des ersten Arrays 4a und des zweiten Arrays 4b gemäß dem in der Figur 2B beschriebenen Ausführungsbeispiel der erfindungsgemäßen Vorrichtung 1. Die Lichtquelle 2 ist mittig zwischen den ersten Elementen 5a angeordnet.

Die Anordnung ermöglicht eine kompakte Bauweise und eine symmetrische Bestrahlung des ersten Arrays 4a und des zweiten Arrays 4b.

Weiterhin können erfindungsgemäß die zwischen den ersten Elementen 5a bzw. Linsen verbleibenden Flächen transparent oder auch intransparent ausgebildet sein. Bevorzugter Weise vermeidet eine intransparente Ausbildung der Flächen zwischen den ersten Elementen 5a bzw. Linsen eine mögliche Beeinflussung der benachbarten ersten Elemente 5a und zugehörigen Empfangselemente 5b bei der Auswertung.

Zur Erhöhung der Messgenauigkeit bzw. zum Verbessern der Auswertung können auch mehrere Lichtquellen 2, insbesondere mit unterschiedlichen Wellenlängen, in der Vorrichtung 1 eingesetzt werden. Hierbei können die Lichtquellen 2 gepulst oder kontinuierlich betrieben sein.

Ferner können die ersten Elemente 5a bzw. Linsen auch gegenüber dem zweiten Array 4b lateral verschoben oder sogar verkippt sein, so dass eine Optimierung der Signale erreichbar wäre. Dies führt bei der Auswertung, z. B. beim Offaxis-Ansatz, zu Vorteilen.

Hierbei ist ein Abstand zwischen dem ersten und zweiten Array 4a, 4b einstellbar, so dass eine verbesserte Kompensation der mechanischen Toleranzen der Vorrichtung 1 optimiert werden kann.

### Bezugszeichenliste

- 1: Vorrichtung
- 2: Lichtquelle
- 3: Modulator
- 3a: Keil
- 4: Empfänger
- 4a: Erstes Array
- 4b: Zweites Array
- 5a: Erstes Element bzw. Linse oder Mikrolinse
- 5b: Empfangselement bzw. Photodiode
- 6: Strahlteiler
- 10: Auswerteeinheit
- W: Welle
- A: Drehachse
- α: Kippwinkel bzw. Taumelwinkel

## Patentansprüche

1. Vorrichtung (1) zur Messung eines Drehwinkels zweier relativ zueinander drehender Objekte,
mit zumindest einer Lichtquelle (2) zum Aussenden von Licht,
mit zumindest einem zu der Lichtquelle (2) relativ drehenden Modulator (3), wobei der zumindest eine Modulator (3) das ausgesendete Licht mit zumindest einem Winkelversatz in Abhängigkeit des Drehwinkels moduliert, mit zumindest einem Empfänger (4), und
mit einer Auswerteeinheit (10),
**dadurch gekennzeichnet, dass**
die zumindest eine Lichtquelle (2) das Licht als Wellenfront aussendet, wobei der zumindest eine Modulator (3) die ausgesendete Wellenfront mit zumindest einem Winkelversatz in Abhängigkeit des Drehwinkels moduliert, der zumindest eine Empfänger (4) zum Empfangen der modulierten Wellenfront vorgesehen ist, wobei der Empfänger (4) ein erstes Array (4a), das die modulierte Wellenfront beeinflussende erste Elemente (5a) umfasst, wobei das erste Array (4a) Linsen oder Mikrolinsen als die ersten Elemente (5a) aufweist, und ein zweites Array (4b), das photoempfindliche Empfangselemente (5b), die als Photodioden, vorzugsweise Quadrantendioden, ausgebildet sind, umfasst, aufweist, die Auswerteeinheit (10) Signale des zweiten Arrays (4b) des Empfängers (4) auswertet, wobei die Signale projizierte Punkte der empfangenen modulierten Wellenfront auf dem zweiten Array (4b) repräsentieren, und aus einer durch den zumindest einen Winkelversatz der modulierten Wellenfront resultierenden Änderung der Signale den Drehwinkel ermittelt, und der Empfänger (4) als ein Wellenfrontsensor ausgebildet ist, wobei die Auswerteeinheit (10) eine Bewegung der projizierten Punkte der empfangenen modulierten Wellenfront auf dem zweiten Array (4b) ermittelt und die Punktbewegung durch Differenzbildung der detektierten Intensitäten der empfangenen modulierten Wellenfront bestimmt, wobei die Auswerteeinheit (10) eine Punktbewegung in unterschiedliche laterale Richtungen bestimmt, so dass die Auswerteeinheit (10) pro Richtung eine Differenzbildung durchführt.

2. Vorrichtung (1) nach Anspruch 1, **dadurch gekennzeichnet, dass** der Modulator (3) an einer Stirnfläche einer Welle (W) befestigt ist, wobei der Modulator (3) in einem vorgegebenen definierten Kippwinkel (α) zu der Stirnfläche der Welle (W) gekippt ist und der Kippwinkel (α) die ausgesendete Wellenfront entsprechend moduliert.

3. Vorrichtung (1) nach Anspruch 1 oder 2, **dadurch gekennzeichnet, dass** die ersten Elemente (5a) des ersten Arrays (4a) am Rande des zweiten Arrays (4b) angeordnet sind, so dass der gesamte Randbereich des zweiten Arrays (4b) durch die ersten Elemente (5a) abgedeckt ist, oder die in Gruppen angeordneten ersten Elemente (5a) derart angeordnet sind, dass Eckbereiche des zweiten Arrays (4b) oder ein Bereich der Mitte des zweiten Arrays (4b) durch die Gruppen von ersten Elemente (5a) abgedeckt sind.

4. Vorrichtung (1) nach einem der vorhergehenden Ansprüche, **dadurch gekennzeichnet, dass** das zweite Array (4b) mindestens genauso viele, vorzugsweise zweimal oder viermal so viele, Empfangselemente (5b) aufweist wie das erste Array (4a) an ersten Elementen (5a) hat.

5. Vorrichtung (1) nach einem der vorhergehenden Ansprüche, **dadurch gekennzeichnet, dass** jeweils vier Empfangselemente (5b), vorzugsweise ein Vielfaches von in Gruppen angeordneten Empfangselementen (5b), einem ersten Element (5a) zugeordnet sind.

6. Vorrichtung (1) nach einem der vorhergehenden Ansprüche, **dadurch gekennzeichnet, dass** die ersten Elemente (5a) die modulierte Wellenfront als Punkte auf die Empfangselemente (5b) projizieren, wobei die projizierten Punkte mit der Drehung des Modulators (3) auf den Empfangselementen (5b) bewegbar sind.

7. Vorrichtung (1) nach einem der vorhergehenden Ansprüche, **dadurch gekennzeichnet, dass** der Modulator (3) derart spiegelnd oder transparent ausgebildet ist, dass die ausgesendete Wellenfront mit dem Winkelversatz moduliert reflektierbar oder transmittierbar ist.

8. Verfahren zur Bestimmung eines Drehwinkels zweier relativ zueinander drehender Objekte, mit den Schritten:
- Aussenden von Licht als Wellenfront mittels einer Lichtquelle (2);
- Modulieren der ausgesendeten Wellenfront mittels eines Modulators (3), wobei der Modulator (3) zumindest einen Kippwinkel (α) aufweist, so dass eine modulierte Wellenfront mit zumindest einem Winkelversatz zu der ausgesendeten Wellenfront auf ein erstes Array (4a) eines Empfängers (4) rückreflektiert oder transmittiert wird;
- Projizieren der modulierten Wellenfront mittels des ersten Arrays (4a) auf einem zweiten Array (4b), so dass eine Mehrzahl von projizierten Punkten auf dem zweiten Array (4b) abgebildet werden;
- Ermitteln einer Bewegung der projizierten Punkte der empfangenen modulierten Wellenfront auf dem zweiten Array (4b), wobei die Punktbewegung durch Differenzbildung der detektierten Intensitäten der empfangenen modulierten Wellenfront bestimmt wird, und wobei die Punktbewegung in unterschiedliche laterale Richtungen bestimmt wird, so dass pro Richtung eine Differenzbildung durchgeführt wird; und
- Ermitteln zumindest eines Drehwinkelsignals aus der kontinuierlichen Veränderung der modulierten Wellenfront und der Punktbewegung der projizierten Punkte.

9. Verfahren nach Anspruch 8, wobei eine Auswertung der projizierten Punkte für jedes die modulierte Wellenfront beeinflussende erste Element (5a) des ersten Arrays (4a) durchgeführt wird und mehrere Drehwinkelsignale entsprechend der Anzahl der ersten Elemente (5a) ermittelt werden.

10. Verfahren nach einem der vorhergehenden Ansprüche, wobei zumindest ein Intensitätsschwerpunkt für mehrere Empfangselemente (5b) ausgewertet wird, so dass der projizierte Punkt des den Empfangselementen (5b) zugeordneten ersten Elements (5a) bestimmt wird.

11. Verfahren nach einem der vorhergehenden Ansprüche, wobei die ermittelten projizierten Punkte der jeweiligen Position der ersten Elemente (5a) zugeordnet werden, so dass zusätzliche Systemgrößen, vorzugsweise Amplitude oder Phasenlage des Drehwinkelsignals bestimmt werden.

## Claims

1. An apparatus (1) for measuring an angle of rotation of two objects rotating relative to one another,
having at least one light source (2) for transmitting light;
having at least one modulator (3) rotating relative to the light source (2), wherein the at least one modulator (3) modulates the transmitted light with at least one angular offset in dependence on the angle of rotation;
having at least one receiver (4); and
having an evaluation unit (10),
**characterised in that**
the at least one light source (2) transmits the light as a wavefront, with the at least one modulator (3) modulating the transmitted wavefront with at least one angular offset in dependence on the angle or rotation;
the at least one receiver (4) is provided for receiving the modulated wavefront, with the receiver (4) having a first array (4a) which comprises first elements (5a) influencing the modulated wavefront, with the first array (4a) having lenses or microlenses as the first elements (5a), and having a second array (4b) which comprises photosensitive reception elements (5b) which are configured as photodiodes, preferably as quadrant diodes, with the evaluation unit (10) evaluating signals of the second array (4b) of the receiver (4), with the signals representing projected points of the received modulated wavefront on the second array (4b), and determining the angle of rotation from a change of the signals resulting by the at least one angular offset of the modulated wavefront, and with the receiver (4) being configured as a wavefront sensor, with the evaluation unit (10) determining a movement of the projected points of the received modulated wavefront on the second array (4b) and determining the point movement by a difference formation of the detected intensities of the received modulated wavefront, with the evaluation unit (10) determining a point movement in different lateral directions such that the evaluation unit (10) carries out one difference formation per direction.

2. An apparatus (1) in accordance with claim 1, **characterized in that** the modulator (3) is fastened to an end surface of a shaft (W), with the modulator (3) being tilted at a predetermined defined tilt angle (α) with respect to the end surface of the shaft (W) and with the tilt angle (α) correspondingly modulating the transmitted wavefront.

3. An apparatus (1) in accordance with claim 1 or claim 2, **characterized in that** the first elements (5a) of the first array (4a) are arranged at the margin of the second array (4b) such that the total marginal region of the second array (4b) is covered by the first elements (5a) or the first elements (5a) arranged in groups are arranged such that corner regions of the second array (4b) or a region of the centre of the second array (4b) are covered by the groups of first elements (5a).

4. An apparatus (1) in accordance with any one of the preceding claims, **characterized in that** the second array (4b) has at least exactly as many, preferably twice as many or four times as many, reception elements (5b) as the first array (4a) has first elements (5a).

5. An apparatus (1) in accordance with any one of the preceding claims, **characterized in that** a respective four reception elements (5b), preferably a multiple of reception elements (5b) arranged in groups, are associated with a first element (5a).

6. An apparatus (1) in accordance with any one of the preceding claims, **characterized in that** the first elements (5a) project the modulated wavefront onto the reception elements (5b) as points, with the projected points being movable with the rotation of the modulator (3) on the reception elements (5b).

7. An apparatus (1) in accordance with any one of the preceding claims, **characterized in that** the modulator (3) is reflective or transparent such that the transmitted wavefront can be reflected or transmitted in a manner modulated by the angular offset.

8. A method of determining an angle of rotation of two objects rotating relative to one another, comprising the steps:
- transmitting light as a wavefront by means of a light source (2);
- modulating the transmitted wavefront by means of a modulator (3), wherein the modulator (3) has at least one tilt angle (α) such that a modulated wavefront is reflected back or is transmitted with at least one angular offset with respect to the transmitted wavefront on a first array (4a) of a receiver (4);
- projecting the modulated wavefront by means of the first array (4a) on a second array (4b) such that a plurality of projected points are imaged on the second array (4b);
- determining a movement of the projected points of the received modulated wavefront on the second array (4b), wherein the point movement is determined by difference formation of the detected intensities of the received modulated wavefront; and wherein the point movement in different lateral directions is determined such that one difference formation is carried out per direction; and
- determining at least one angle of rotation signal from the continuous change of the modulated wavefront and of the point movement of the projected points.

9. A method in accordance with claim 8, wherein an evaluation of the projected points is carried out for each first element (5a) of the first array (4a) influencing the modulated wavefront and a plurality of angle of rotation signals are determined corresponding to the number of first elements (5a).

10. A method in accordance with any one of the preceding claims, wherein at least one centre of intensity for a plurality of reception elements (5b) is evaluated such that the projected point of the first element (5a) associated with the reception elements (5b) is determined.

11. A method in accordance with any one of the preceding claims, wherein the determined projected points are associated with the respective position of the first elements (5a) such that additional system parameters, preferably the amplitude or the phasing of the angle of rotation signal, are determined.

## Revendications

1. Dispositif (1) pour la mesure d'un angle de rotation de deux objets en rotation l'un par rapport à l'autre,
comprenant au moins une source de lumière (2) pour émettre de la lumière,
comprenant au moins un modulateur (3) en rotation relativement à la source de lumière (2), tel que ledit au moins un modulateur (3) module la lumière émise avec au moins un décalage angulaire en fonction de l'angle de rotation,
comprenant au moins un récepteur (4), et
comprenant une unité d'évaluation (10),
**caractérisé en ce que**
ladite au moins une source de lumière (2) émet la lumière sous la forme d'un front d'onde, dans lequel ledit au moins un modulateur (3) module le front d'onde émis avec au moins un décalage angulaire en fonction de l'angle de rotation,
ledit au moins un récepteur (4) est prévu pour la réception du front d'onde modulé, dans lequel le récepteur (4) comprend un premier réseau (4a) qui inclut des premiers éléments (5a) influençant le front d'onde modulé, tel que le premier réseau (4a) comprend des lentilles ou des microlentilles à titre de premiers éléments (5a), et comprend un second réseau (4b) qui inclut des éléments récepteurs photosensibles (5b), réalisés sous forme de photodiodes et de préférence de diodes à quadrant, l'unité d'évaluation (10) exploite des signaux du second réseau (4b) du récepteur (4), lesdits signaux représentant des points projetés du front d'onde modulé reçu sur le second réseau (4b), et détermine l'angle de rotation à partir d'une modification des signaux résultants dudit au moins un décalage angulaire du front d'onde modulé, et le récepteur (4) est réalisé comme un capteur de front d'onde, dans lequel l'unité d'évaluation (10) détermine un mouvement des points projetés du front d'onde modulé reçu sur le second réseau (4b) et définit le mouvement ponctuel par formation d'une différence des intensités détectées du front d'onde modulé reçu, dans lequel l'unité d'évaluation (10) définit un mouvement ponctuel dans des directions latérales différentes, de sorte que l'unité d'évaluation (10) exécute la formation d'une différence pour chaque direction.

2. Dispositif (1) selon la revendication 1, **caractérisé en ce que** le modulateur (3) est fixé sur une surface frontale d'un arbre (W), dans lequel le modulateur (3) est basculé d'un angle de basculement défini prédéterminé (α) par rapport à la surface frontale de l'arbre (W), et l'angle de basculement (α) module de façon correspondante le front d'onde émis.

3. Dispositif (1) selon la revendication 1 ou 2, **caractérisé en ce que** les premiers éléments (5a) du premier réseau (4a) sont agencés à la bordure du second réseau (4b), de sorte que la totalité de la zone de bordure du second réseau (4b) est couverte par les premiers éléments (5a), ou les premiers éléments (5a) agencés en groupe sont agencés de telle façon que des zones de coin du second réseau (4b) ou une zone du milieu du second réseau (4b) sont couvertes par les groupes de premiers éléments (5a).

4. Dispositif (1) selon l'une des revendications précédentes, **caractérisé en ce que** le second réseau (4b) comprend au moins exactement autant, et de préférence deux fois plus ou quatre fois plus d'éléments de réception (5b) que le premier réseau (4a) comprend de premiers éléments (5a).

5. Dispositif (1) selon l'une des revendications précédentes, **caractérisé en ce que** quatre éléments de réception (5b) respectifs, de préférence un multiple d'éléments de réception (5b) agencés en groupe, sont associés à un premier élément (5a).

6. Dispositif (1) selon l'une des revendications précédentes, **caractérisé en ce que** les premiers éléments (5a) projettent le front d'onde modulé sous la forme de points sur les éléments de réception (5b), et avec la rotation du modulateur (3), les points projetés sont déplaçables sur les éléments de réception (5b).

7. Dispositif (1) selon l'une des revendications précédentes, **caractérisé en ce que** le modulateur (3) est réalisé réfléchissant ou transparent de telle façon que le front d'onde émis est susceptible d'être réfléchi ou transmis de manière modulée avec le décalage angulaire.

8. Procédé pour la détermination d'un angle de rotation de deux objets en rotation l'un par rapport à l'autre, comprenant les étapes consistant à:
- émettre de la lumière sous forme de front d'onde au moyen d'une source de lumière (2) ;
- moduler le front d'onde émis au moyen d'un modulateur (3), dans lequel le modulateur (3) présente au moins un angle de basculement (α), de sorte qu'un front d'onde modulé avec au moins un décalage angulaire par rapport au front d'onde émis est réfléchi ou transmis vers un premier réseau (4a) d'un récepteur (4) ;
- projeter le front d'onde modulé au moyen du premier réseau (4a) vers un second réseau (4b), de sorte que l'on forme l'image d'une pluralité de points projetés sur le second réseau (4b) ;
- déterminer un mouvement des points projetés du front d'onde modulé reçu sur le second réseau (4b), dans lequel le mouvement ponctuel est déterminé par formation de différence des intensités détectées du front d'onde modulé reçu, et dans lequel le mouvement ponctuel est déterminé dans des directions latérales différentes, de sorte que l'on exécute une formation de différence pour chaque direction ; et
- déterminer au moins un signal d'angle de rotation à partir de la variation continue du front d'onde modulé et du mouvement ponctuel des points projetés.

9. Procédé selon la revendication 8, dans lequel on exécute une évaluation des points projetés pour chaque premier élément (5a), du premier réseau (4a), qui influence le front d'onde modulé, et on détermine plusieurs signaux d'angle de rotation en correspondance du nombre des premiers éléments (5a).

10. Procédé selon l'une des revendications précédentes, dans lequel on évalue au moins un barycentre d'intensité pour plusieurs éléments de réception (5b), de sorte que l'on détermine le point projeté du premier élément (5a) associé aux éléments de réception (5b).

11. Procédé selon l'une des revendications précédentes, dans lequel les points projetés déterminés sont associés à la position respective des premiers éléments (5a), de sorte que l'on détermine des grandeurs systémiques additionnelles, de préférence l'amplitude ou la position en phase du signal d'angle de rotation.
